# EUROPEAN PATENT APPLICATION

(11) **EP 3 968 527 A1**
(43) Date of publication of application: **16.03.2022**
(21) Application number: 20823508.5
(22) Date of filing: 23.04.2020
(51) Int. Cl.: H04B 1/40

(54) **MILLIMETER WAVE TRANSCEIVER**

(30) Priority: 13.06.2019 CN 201910510159
(71) Applicant: ZTE Corporation, shenzhen Guangdong 518057 (CN)
(72) Inventor: DING, Heng, Shenzhen, Guangdong 518057 (CN); JIN, Hefei, Shenzhen, Guangdong 518057 (CN); YE, Yong, Shenzhen, Guangdong 518057 (CN); TIAN, Shen, Shenzhen, Guangdong 518057 (CN); PAN, Xiaojun, Shenzhen, Guangdong 518057 (CN)
(74) Representative: WBH Wachenhausen Patentanwälte PartG mbB
(86) International application number: PCT/CN2020/086389
(87) International publication number: WO 2020/248725

(57) **Abstract**

Disclosed is a millimeter wave transceiver. The millimeter wave transceiver includes: a digital module, a radio frequency module and a millimeter wave control front-end module. The millimeter wave control front-end module is connected to the radio frequency module, and the radio frequency module is connected to the digital module. The millimeter wave control front-end module includes: a beamforming circuit, a millimeter wave transceiver front-end circuit and an array antenna. The array antenna is connected to the millimeter wave transceiver front-end circuit, and the millimeter wave transceiver front-end circuit is connected to the beamforming circuit.

## Description

### CROSS-REFERENCE TO RELATED APPLICATION

The present application claims priority to Chinese Patent Application 201910510159.0 filed to the CNIPA on June 13, 2019, which is incorporated herein by reference in its entirety.

### TECHNICAL FIELD

The present application relates to the communication field, in particular to a millimeter wave transceiver.

### BACKGROUND

In the mobile communication field, the development of products has experienced the 2nd generation mobile communication technology (2G), the 3rd generation mobile communication technology (3G), the 4th generation mobile communication technology (4G), etc., and now is experiencing the booming 5th generation mobile communication technology (5G). The International Telecommunication Union and the relevant departments in China have allocated spectrum recourses for 5G applications. In addition to spectrum resources being classified for frequency bands below 6 GHz, application frequency bands are also classified in millimeter wave and neighboring frequency band ranges, such as 26 GHz, 28 GHz, 39 GHz and 60 GHz. In the millimeter wave frequency band (5G high frequency), the available spectrum bandwidth in the mobile communication field is wider than that in the low frequency (Sub 6G) and can provide a higher data transmission rate. Therefore, the communication applications in the millimeter wave frequency band have a more promising application prospect.

The development of millimeter wave transceivers, as an important part of base station devices and mobile terminal devices, is the key and difficult point in the development of 5G. Compared with 4G and earlier products, the transceivers applied in the 5G millimeter wave frequency band are significantly different in that they operate in high frequency, but a higher operating frequency will cause a series of design difficulties.

### SUMMARY

The present application provides a millimeter wave transceiver which can be applied to applications in the millimeter wave frequency band.

The present application provides a millimeter wave transceiver, including: a digital module, a radio frequency module and a millimeter wave control front-end module. The millimeter wave control front-end module is connected to the radio frequency module, and the radio frequency module is connected to the digital module. The millimeter wave control front-end module includes: a beamforming circuit, a millimeter wave transceiver front-end circuit and an array antenna. The array antenna is connected to the millimeter wave transceiver front-end circuit, and the millimeter wave transceiver front-end circuit is connected to the beamforming circuit.

### BRIEF DESCRIPTION OF DRAWINGS

FIG. 1 is a schematic diagram of an electrical framework of a millimeter wave transceiver according to an embodiment of the present application;
FIG. 2 is a schematic structural diagram of a millimeter wave transceiver according to an embodiment of the present application;
FIG. 3 is a schematic structural diagram of a circuit board of a millimeter wave control front-end module according to an embodiment of the present application;
FIG. 4 is a schematic diagram showing partition of an array antenna according to an embodiment of the present application;
FIG. 5 is a schematic diagram showing another partition of the array antenna according to an embodiment of the present application; and
FIG. 6 is a schematic diagram showing another partition of the array antenna according to an embodiment of the present application.

### DETAILED DESCRIPTION

The embodiments of the present application will be described in detail below with reference to the accompanying drawings.

Compared with 4G and earlier products, the design of transceivers applied in the 5G millimeter wave frequency band has the following characteristics. (1) The electrical characteristics of the millimeter wave transceiver front-end link are easily affected by parasitic parameters, and the radio frequency characteristics of the link are relatively sensitive. (2) In the millimeter wave frequency band, the transmission loss of electromagnetic wave signals is relatively high. In order to improve the signal coverage of devices, the transceivers are required to have higher effective isotropic radiated power (EIRP) and lower equivalent isotropic sensitivity (EIS), which correspond to the transmitting and receiving characteristics of the transceivers, respectively. That is, it is necessary to apply multi-antenna and beamforming technologies. (3) As mass commercial devices, it is required that the transceivers are easy to produce, debug and maintain under the condition of satisfying the electrical performance, that is, it is required that the transceivers can quickly satisfy the users' requirements and can reduce the cost.

Based on the above characteristics, an embodiment of the present application provides a millimeter wave transceiver which can be applied to applications in the 5G millimeter wave frequency band, such as remote radio unit (RRU) devices in base stations, or can also be applied to millimeter wave point-to-point and point-to-multipoint communication applications.

The millimeter wave transceiver provided in the embodiment of the present application includes: a digital module, a radio frequency module and a millimeter wave control front-end module. The millimeter wave control front-end module is connected to the radio frequency module, and the radio frequency module is connected to the digital module. The millimeter wave control front-end module includes: a beamforming circuit, a millimeter wave transceiver front-end circuit and an array antenna. The array antenna is connected to the millimeter wave transceiver front-end circuit, and the millimeter wave transceiver front-end circuit is connected to the beamforming circuit.

In terms of electrical characteristics, the millimeter wave transceiver provided in the embodiment of the present application includes a portion of a communication link from a digital intermediate frequency to a transceiver antenna, where a transmitting link up-converts a digital intermediate frequency signal into a millimeter wave frequency band and then transmits the signal through the antenna, and a receiving link down-converts the millimeter wave frequency band signal received by the antenna into a digital intermediate frequency signal for back-end processing. Moreover, in this embodiment, the multi-antenna beamforming technology is used to improve the signal coverage.

In an implementation, the beamforming circuit, the millimeter wave transceiver front-end circuit and the array antenna are integrated on a circuit board. That is, the millimeter wave control front-module may be of an integral design. The circuit board may be a multilayer circuit board formed by mixed-compression of multiple boards. The array antenna is integrated on a top layer of the circuit board, and the beamforming circuit and the millimeter wave transceiver front-end circuit are integrated on other layers of the circuit board. In an implementation, electronic components such as the millimeter wave transceiver front-end device and other control devices may be placed on a bottom layer of the circuit board; a power distribution network, a radio frequency transmission line, a signal control wiring or the like may be orderly distributed on multiple layers of the circuit board; and the array antenna is in the form of a microstrip antenna and may be integrated on the top layer of the circuit board. The integral circuit design mode for the integrated antenna can realize the high-density component arrangement, which makes the circuit structure compact and suitable for the characteristics of the millimeter wave frequency band such as short operating wavelength and small circuit size. Moreover, this circuit design can make full use of printed circuit board (PCB) manufacturing and component mounting & welding processes, and reduce the discreteness of the circuit, so that it is advantageous to improve the production efficiency and reduce the production cost.

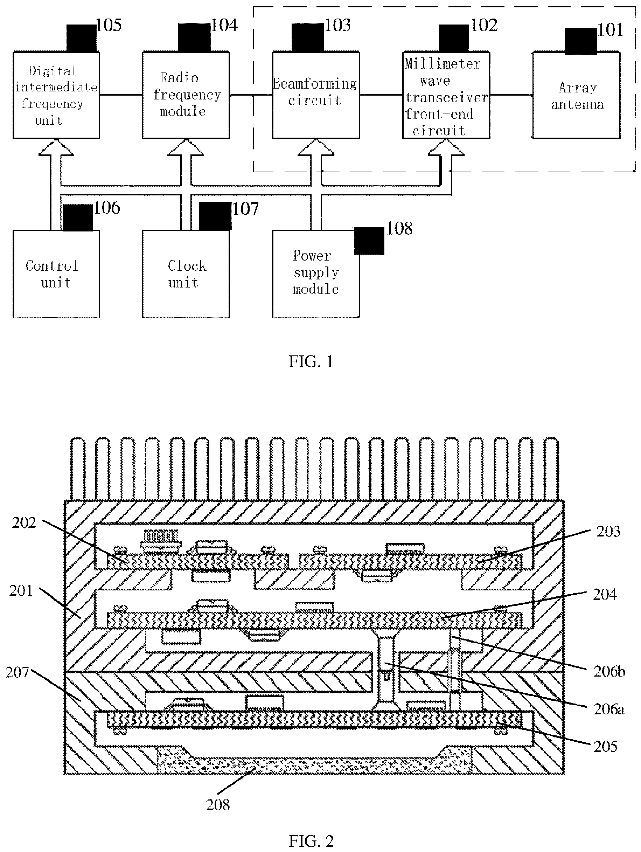

FIG. 1 is a schematic diagram of an electrical framework of a millimeter wave transceiver according to an embodiment of the present application. As shown in FIG. 1, in accordance with the electrical function division, the millimeter wave transceiver provided in this embodiment may include an array antenna 101, a millimeter wave transceiver front-end circuit 102, a beamforming circuit 103, a radio frequency module 104, a digital intermediate frequency unit 105, a control unit 106, a clock unit 107 and a power supply module 108.

As shown in FIG. 1, the millimeter wave transceiver front-end circuit 102 is connected to the array antenna 101. The beamforming circuit 103 is connected to the millimeter wave transceiver front-end circuit 102. The radio frequency module 104 is connected to the beamforming circuit 103. The digital intermediate frequency unit 105 is connected to the radio frequency module 104. The control unit 106 is connected to the digital intermediate frequency unit 105, the radio frequency module 104, the beamforming circuit 103 and the millimeter wave transceiver front-end circuit 102, respectively. The clock unit 107 may be connected to the digital intermediate frequency unit 105, the radio frequency module 104, the beamforming circuit 103 and the millimeter wave transceiver front-end circuit 102, respectively. The power supply module 108 may be connected to the digital intermediate frequency unit 105, the radio frequency module 104, the beamforming circuit 103 and the millimeter wave transceiver front-end circuit 102, respectively.

In this embodiment, the digital intermediate frequency unit 105 may be configured to realize the conversion between a baseband digital signal and a radio frequency signal in two signal transmission directions, i.e., receiving and transmitting. In an implementation, the radio frequency signal transmitted by the radio frequency module 104 is up-converted into a digital intermediate frequency signal for processing by the control unit 106. Alternatively, the digital intermediate frequency signal is up-converted into a radio frequency signal and then transmitted to the radio frequency module 104. In an implementation, the digital intermediate frequency unit 105 may include a digital up-converter, a digital down-converter, a digital-to-analog converter, an analog-to-digital converter, an intermediate frequency filter, a gain control circuit, etc. The implementation of the digital intermediate frequency unit 105 will not be limited in the present application.

In this embodiment, the digital intermediate frequency unit 104 may be configured to realize the conversion between a radio frequency signal and a millimeter wave signal in two signal transmission directions, i.e., receiving and transmitting. In an implementation, the millimeter wave signal transmitted by the beamforming circuit 103 is down-converted into a radio frequency signal and then provided to the digital intermediate frequency unit 105. Alternatively, the radio frequency signal received from the digital intermediate frequency unit 105 is up-converted into a millimeter wave signal and then transmitted to the beamforming circuit 103. In an implementation, the radio frequency module 104 may include an up-converter, a down-converter, an intermediate frequency filter, a gain control amplifier, etc. The implementation of the radio frequency module 104 will not be limited in the present application.

In this embodiment, the beamforming circuit 103 can accurately control the phase and amplitude of the signal to obtain multiple signals with phases and amplitudes satisfying a specific relationship, thereby realizing the beamforming function. In an implementation, the beamforming circuit 103 may include a multi-channel power division (combination) network, a phase shifter, an attenuator, etc. The implementation of the beamforming circuit 103 will not be limited in the present application.

In this embodiment, the millimeter wave transceiver front-end circuit 102 may be configured to amplify the signal received by the array antenna 101 at low noise, and amplify the power of the signal from the transmitting link and then output the signal to the array antenna 101 for radiation. In an implementation, the millimeter wave transceiver front-end circuit 102 may include a low-noise amplifier in a receiving channel, a power amplifier in a transmitting channel, etc. However, the implementation of the millimeter wave transceiver front-end circuit 102 will not be limited in the present application.

In this embodiment, the array antenna 101 may be configured to receive and transmit millimeter wave signals. The array antenna 101 may include M groups of antenna elements configured to provide M independent radio frequency channels, where M is a positive integer. The antenna elements 101 may be in the form of micro strips.

In this embodiment, the control unit 106 (e.g., microcontroller unit (MCU)) may be configured to complete the configuration and control of a plurality of partial circuits in the millimeter wave transceiver, task scheduling, signal processing, and communication with an external interface.

In this embodiment, the clock unit 107 may be configured to generate a variety of synchronous clock signals required by all sequential logical circuits in the millimeter wave transceiver, so that the millimeter wave transceiver is synchronous with the whole communication network.

In this embodiment, the power supply module 108 may be configured to convert the external power supplied to the millimeter wave transceiver into various voltages required by internal circuit components.

The above functional blocks may be arranged on different circuit boards according to their positions in the link. In an implementation, the digital intermediate frequency unit 105, the control unit 106 and the clock unit 107 may be arranged on a digital circuit board (corresponding to the digital module). The radio frequency module 104 may be arranged on a radio frequency circuit board. The power supply module 108 may be arranged on a power supply board. The beamforming circuit 103, the millimeter wave transceiver front-end circuit 102 and the array antenna 101 may be integrated on a millimeter wave control front-end circuit board (corresponding to the millimeter wave control front-end module). The millimeter wave control front-end circuit is in an integral design, and may be of a single-board structure in which all components and antennas are integrated on one circuit board. In this embodiment, all the electrical and signal connections between different circuit modules (including the connection between the millimeter wave control front-end module and the radio frequency module 104, and the connection between the millimeter wave transceiver front-end circuit and the array antenna 101) may be "blind plug-in" connections, so that the physical size can be reduced, and it is easy to assemble and maintain. According to actual needs, general circuit branches such as the power supply circuit, the clock circuit and the control circuit may be distributed on the plurality of circuit boards described above.

FIG. 2 is a schematic structural diagram of a millimeter wave transceiver according to an embodiment of the present application. In this embodiment, the description will be give based on the antenna array including 64 antenna elements. FIG. 2 shows a longitudinally sectional view of the millimeter wave transceiver according to this embodiment, in which the physical structure, circuit board distribution and interconnection of the millimeter wave transceiver are illustrated.

As shown in FIG. 2, the millimeter wave transceiver provided in this embodiment may include a first frame 201, a second frame 207, a digital circuit board 203, a power supply board 202, a radio frequency circuit board 204 and a millimeter wave control front-end circuit board 205. The power supply board 202, the digital circuit board 203 and the radio frequency circuit board 204 are arranged in the first frame 201. Other circuit components in non-millimeter wave operating frequency bands such as digital interfaces and power supply interfaces may also be integrated and assembled on the circuit boards in the first frame 201, and the frameworks and functions of these components or devices may be conventional, which will not be limited in the present application.

As shown in FIG. 2, the millimeter wave control front-end circuit board 205 is arranged in the second frame 207. The second frame 207 is detachably assembled on the first frame 201. A heat sink may be arranged on the first frame 201. The first frame 201 and the second frame 207 are assembled to form a body structure of a case so as to form a physical frame of the whole millimeter wave transceiver, which supports and protects the circuit boards and also plays a heat dissipation role. In the present application, the detachable assembling between the first frame 201 and the second frame 207 will not be limited. In an implementation, it may be realized as snapped-fit assembly or screw assembly.

In this embodiment, as shown in FIG. 2, the millimeter wave signal interconnection between the radio frequency circuit board 204 and the millimeter wave control front-end circuit board 205 may be realized by a compact coaxial transmission line 206b. The connection such as power supply and control signals between the millimeter wave control front-end circuit board 205 and the radio frequency circuit board 204 may be realized by a high-density gold finger socket 206a (or by a high-density multicore socket). However, this will not be limited in the present application. During the actual assembling operation, the millimeter wave signal and electrical interfaces between the millimeter wave control front-end circuit board 205 and the radio frequency circuit board 204 may be assembled in a blind assembling manner. In order to ensure successful blind assembling, auxiliary mounting devices such as locating pins and guide rails may be designed structurally. However, this will not be limited in the present application.

In this embodiment, as shown in FIG. 2, a wave-transmitting protective shield 208 is further arranged on the second frame 207, and a side face of the millimeter wave control front-end circuit board 205 on which the array antenna is integrated faces the wave-transmitting protective shield 208. The wave-transmitting protective shield 208 is configured to provide physical protection, without affecting the receiving/transmitting function of the array antenna on the millimeter wave control front-end circuit board 205.

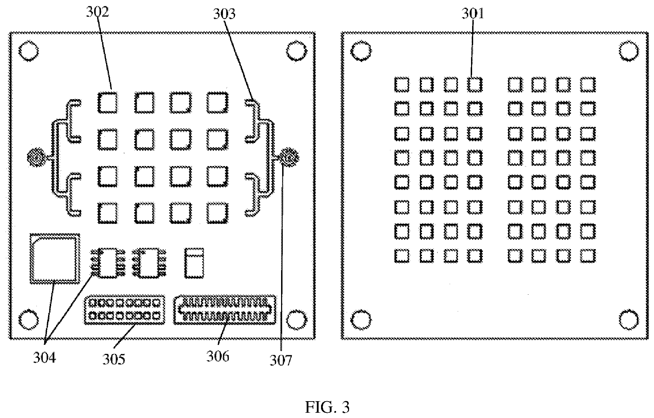

FIG. 3 is a schematic structural diagram of a circuit board of a millimeter wave control front-end module according to an embodiment of the present application. FIG. 3 shows a schematic diagram of front and rear sides of the millimeter wave control front-end circuit board which does not include a physical shielding mechanism. The millimeter wave control front-end circuit board is of a single-board structure and operates in a millimeter wave frequency band. On the millimeter wave control front-end circuit board, the beamforming circuit, the millimeter transceiver front-end circuit and the array antenna are integrated. The circuits operating in the millimeter wave frequency band and the array antenna are of an integral design, where a multilayer circuit board formed by mixed-compression of multiple boards is used as a carrier, circuit topologies such as the transceiver front-end circuit and the beamforming circuit and the array antenna are integrated on this board.

In this embodiment, the millimeter transceiver front-end device, the digital control device and other electronic components may be placed on the bottom layer of the circuit board. The power distribution network, the radio frequency transmission line, the signal control wiring or the like are orderly distributed in multiple layers of the circuit board. The array antenna is in the form of a microstrip antenna, and is integrated on the top layer of the circuit board and directly connected to the signal channel interface of the front-end circuit, leading to a reduced physical size, minimized transmission path loss and improved integration level. As shown in FIG. 3, the array antenna 301 may be integrated on one side of the circuit board, and a wave control chip 302, a power division network 303, a power supply interface 305, a control signal interface 306, a radio frequency interface 307 and other electronic components 304 are arranged on the other side of the circuit board.

In this embodiment, the whole millimeter wave control front-end module includes a plurality of transceiver beamforming channels, each of which corresponds to one antenna element. In design, the number of channels may be increased or decreased according to the requirements for beamforming. The phase and amplitude of signals may be adjusted by the plurality of channels according to a certain rule to achieve the desired forming effect. As shown in FIG. 3, the array antenna includes 64 antenna elements in total, which correspond to 64 transceiver beamforming channels.

In this embodiment, since the millimeter wave control front-end module is relatively independent in physical structure, it is more flexible in beamforming channel expansion. The number of transceiver beamforming channels may be increased or decreased according to different index requirements such as equivalent antenna radiation aperture and beam pointing resolution.

The millimeter wave transceiver provided in this embodiment is designed according to the platformization idea, and the circuits with different functions are designed, manufactured and debugged in blocks, and organically assembled together to form a relatively complete millimeter wave transceiver integrating a plurality of antenna elements. The "modular" structure in the block design takes into consideration the electromagnetic compatibility, which is advantageous to realize good shielding effects, and can be conveniently assembled and interchanged. With this structure, when multiple modules are assembled together, multiple electronic components are actually distributed in a three-dimensional space, so that it is advantageous to realize high density and high integral level. Moreover, this structure can realize better heat dissipation, and is suitable for application scenarios with high transmitted power in combination with the heat dissipation design of the complete machine.

In an implementation, the array antenna may include M groups of antenna elements, and different groups of antenna elements are different in terms of at least one of polarization direction and operating frequency band, where M is a positive integer. In an implementation, M is 2, and polarization directions of two groups of antenna elements are perpendicular to each other. Alternatively, M is 2, and two groups of antenna elements have different operating frequency bands. Alternatively, M is 4, the operating frequency band for a first group of antenna elements is the same as that for a third group of antenna elements, the operating frequency band for a second group of antenna elements is the same as that for a fourth group of antenna elements and different from that for the first group of antenna elements, the polarization direction of the first group of antenna elements is the same as that of the fourth group of antenna elements, and the polarization direction of the second group of antenna elements is the same as that of the third group of antenna elements and perpendicular to that of the first group of antenna elements. The number of antenna elements in each group of antenna elements may be the same or different, which will not be limited in the present application.

In an implementation, with the structure shown in FIG. 2 remaining unchanged, millimeter wave transceivers having different electrical characteristics can be realized by replacing the millimeter wave control front-end module of the millimeter wave transceiver provided in the embodiment of the present application, thereby flexibly satisfying different application requirements.

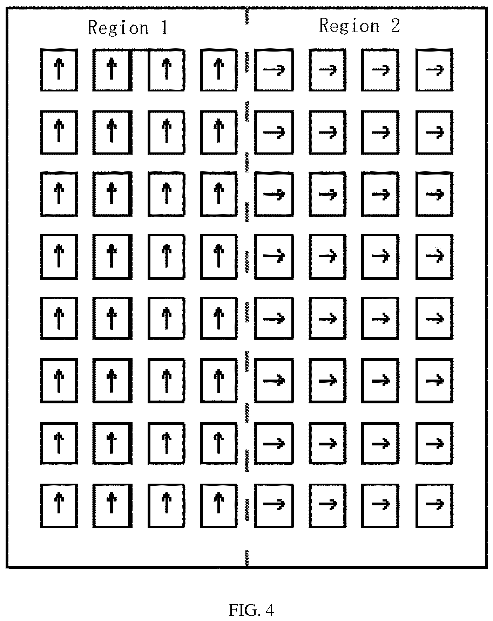

FIG. 4 is a schematic diagram showing partition of an array antenna according to an embodiment of the present application. The electrical principle and physical architecture of the millimeter wave transceiver implemented in this embodiment are the same as those described in FIGS. 1 and 2. In this embodiment, in the case of the same size and structure of the circuit board, millimeter wave transceivers with various antenna polarization directions can be realized by replacing the millimeter wave control front-end module with one including antenna arrays having different polarization directions. In this embodiment, based on the structure shown in FIG. 2, the circuit structure in the first frame may remain unchanged, and electromagnetic signals with various polarization directions can be transmitted and received on the same millimeter wave transceiver by replacing the second frame and the millimeter wave control front-end module in the second frame.

FIG. 4 merely illustrates the characteristics of the antenna element region, where each antenna element corresponds to one beamforming channel on the rear side. In this embodiment, there are 64 antenna elements in total which correspond to 64 independent wave control channels respectively. In this embodiment, 64 antenna elements are classified into two regions (i.e., two groups), and each group includes 32 antenna elements. As shown in FIG. 4, 32 antenna elements with a vertical polarization direction are arranged in region 1 on the left. The wave control channels corresponding to the 32 antenna elements perform joint formation according to a certain rule, so that desired antenna beams can be formed. 32 antenna elements with a horizontal polarization direction are further arranged in region 2 on the right. The 32 antenna elements can also form a group of jointly formed antenna beams.

It can be known from this embodiment that, based on the structure of the millimeter wave transceiver provided in this embodiment, millimeter wave transceivers capable of transmitting and receiving electromagnetic signals with different polarization directions can be realized by only changing the array antenna of the millimeter wave control front-end module.

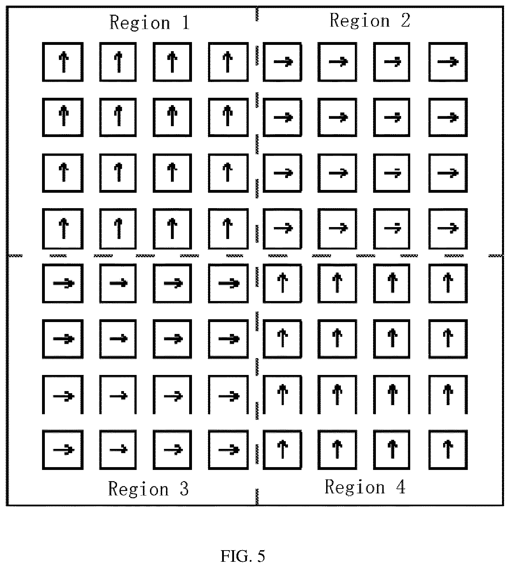

FIG. 5 is a schematic diagram showing another partition of the array antenna according to an embodiment of the present application. The electrical principle and physical architecture of the millimeter wave transceiver implemented in this embodiment are the same as those described in FIGS. 1 and 2. In this embodiment, in the case of the same size and structure of the circuit board, millimeter wave transceivers having different operating frequency bands and antenna polarization directions can be realized by replacing the array antenna with one having different characteristics of operating frequency band and polarization direction matched with the operating frequency band. In this embodiment, based on the structure shown in FIG. 2, the circuit structure in the first frame can remain unchanged, and one transceiver can transmit and receive signals having different frequency bands and different polarization modes by replacing the second frame and the millimeter wave control front-end module in the second frame.

In this embodiment, there are 64 antenna elements in total which correspond to 64 independent wave control channels respectively. In this embodiment, 64 antenna elements are classified into four regions (i.e., four groups), and each group includes 16 antenna elements. As shown in FIG. 5, the operating frequency band for the antenna elements and the corresponding millimeter wave control modules in regions 1 and 3 on the left is 26 GHz; 16 antenna elements in region 1 are vertically polarized; and 16 antenna elements in region 3 are horizontally polarized. The operating frequency band for the antenna elements and the corresponding millimeter wave control modules in regions 2 and 4 on the right is 39 GHz; 16 antenna elements in region 2 are horizontally polarized; and 16 antenna elements in region 4 are vertically polarized.

In this embodiment, a millimeter wave transceiver that can simultaneously transmit and receive signals with different frequency bands and different polarization modes is realized by configuring the millimeter wave control front-end module without particularly changing other parts. In this embodiment, the millimeter wave transceiver having vertical and horizontal polarization modes is realized at 26 GHz and 39 GHz.

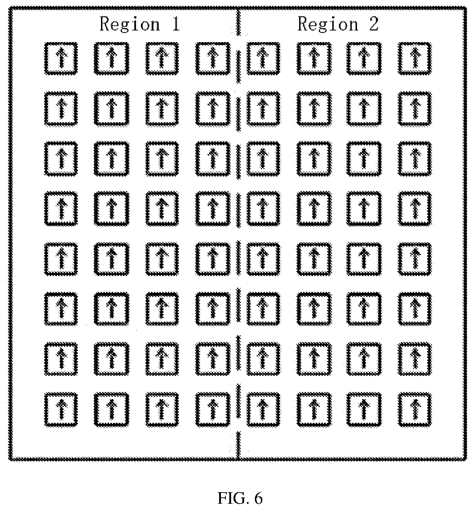

FIG. 6 is a schematic diagram showing another partition of the array antenna according to an embodiment of the present application. In wideband and ultra-wideband communication scenarios, since the operating bandwidth is very large, high requirements are put on the radio frequency components, and even the frequency band characteristics of one device cannot satisfy the requirements for the operating bandwidth. In this embodiment, by dividing the operating frequency band into a plurality of frequency sub-bands, different radio frequency channels and corresponding array antennas operate on different frequency sub-bands, and the complete operating bandwidth is realized by carrier aggregation.

The electrical principle and physical architecture of the millimeter wave transceiver implemented in this embodiment are the same as those described in FIGS. 1 and 2. In this embodiment, the main architecture and the circuits in the first frame in the millimeter transceiver shown in FIG. 2 remain unchanged, and the wideband millimeter wave transceiver is realized by carrier aggregation by replacing the second frame and the millimeter wave control front-end module in the second frame.

As shown in FIG. 6, in this embodiment, the operating frequency band f for the millimeter wave control front-end module and the antenna elements is divided into two parts, i.e., f1 and f2. 32 antenna elements and corresponding wave control channels in region 1 on the left operate on the frequency band f1, and 32 antenna elements and corresponding wave control channels in region 2 on the right operate on the frequency band f2. The two regions are combined at an air interface by carrier aggregation to realize the transmission and reception of wideband signals. In this way, a wideband transceiver with a carrier aggregation function is realized by configuring the millimeter wave control front-end module without particularly changing other parts.

Embodiments of the present application completely and systematically implement a millimeter wave transceiver, which is high in integration level, compact in structure and convenient for efficient production. The millimeter wave transceiver provided in the embodiments is designed according to the platformization and modular idea, and multiple modules can be kept relatively stable, debugged independently and assembled and maintained conveniently. Moreover, since the array antenna is integrated in the millimeter wave control front-end module, with the circuit structure of the non-millimeter wave frequency band remaining unchanged, a millimeter wave transceiver having different electrical characteristics can be designed by replacing the millimeter wave control front-end module, so that the realized millimeter wave transceiver can flexibly satisfy different application requirements.

In the description of the present application, the orientation or positional relationship indicated by terms "upper", "lower", "one side", "the other side", "one end", "the other end", "edge", "opposite to", "four corners", "periphery", "mouth-shaped structure" or the like is an orientation or positional relationship shown based on the accompanying drawings, merely for describing the present application and simplifying the description, rather than indicating or implying that the specified structure must have a particular orientation or be constructed and operated in a particular orientation. Therefore, the terms shall not be interpreted as limiting the present application.

In the description of the embodiments of the present application, unless otherwise clearly specified and defined, the terms "connect", "directly connect", "indirectly connect", "fixedly connect", "mount" and "assemble" should be interpreted in a broad sense. For example, it may be fixed connection, or may be detachable connection or integral connection. The terms "mount", "connect" and "fixedly connect" may be direct connection, or connection through an intervening medium, or internal communication between two elements. The meanings of the terms in the present application should be understood as appropriate.

## Claims

1. A millimeter wave transceiver, comprising:
a digital module,
a radio frequency module connected to the digital module, and
a millimeter wave control front-end module connected to the radio frequency module and comprising:
a beamforming circuit,
a millimeter wave transceiver front-end circuit connected to the beamforming circuit, and
an array antenna connected to the millimeter wave transceiver front-end circuit.

2. The millimeter wave transceiver of claim 1, wherein the beamforming circuit, the millimeter wave transceiver front-end circuit and the array antenna are integrated on a circuit board.

3. The millimeter wave transceiver of claim 2, wherein the circuit board is a multilayer circuit board formed by mixed-compression of multiple boards, the array antenna is integrated on a top layer of the circuit board, and each of the beamforming circuit and the millimeter wave transceiver front-end circuit is integrated on a layer of the circuit board other than the top layer.

4. The millimeter wave transceiver of any one of claims 1 to 3, wherein the array antenna comprises M groups of antenna elements, and different groups of antenna elements are different in terms of at least one of polarization direction and operating frequency band, where M is a positive integer.

5. The millimeter wave transceiver of claim 4, wherein M is equal to two, and each of the two groups of antenna elements has a polarization direction perpendicular to each other.

6. The millimeter wave transceiver of claim 4, wherein M is equal to two, and each of the two groups of antenna elements has an operating frequency band different from each other.

7. The millimeter wave transceiver of claim 4, wherein M is equal to four; a first group of antenna elements operate in a frequency band identical to a frequency band in which a third group of antenna elements operate, and a second group of antenna elements operate in a frequency band identical to a frequency band in which a fourth group of antenna elements operate and different from the frequency band in which the first group of antenna elements operate; and the first group of antenna elements have a polarization direction identical to a polarization direction of the fourth group of antenna elements, and the second group of antenna elements have a polarization direction identical to a polarization direction of the third group of antenna elements and perpendicular to the polarization direction of the first group of antenna elements.

8. The millimeter wave transceiver of any one of claims 1 to 3, further comprising a first frame and a second frame, the digital module and the radio frequency module being arranged in the first frame, the millimeter wave control front-end module being arranged in the second frame, and the second frame being detachably assembled on the first frame.

9. The millimeter wave transceiver of claim 8, further comprising a power supply module, which is arranged in the first frame and connected to the digital module, the radio frequency module and the millimeter wave control front-end module.

10. The millimeter wave transceiver of any one of claims 1 to 3, wherein the digital module comprises a digital intermediate frequency unit, a control unit and a clock unit, both of the control unit and the clock unit are connected to the digital intermediate unit, the radio frequency module and the millimeter wave control front-end module.
